# EUROPÄISCHE PATENTSCHRIFT

(11) **EP 4 399 017 B1**
(45) Veröffentlichungstag und Bekanntmachung des Hinweises auf die Patenterteilung: **11.06.2025**
(21) Anmeldenummer: 22746983.0
(22) Anmeldetag: 06.07.2022
(51) Int. Cl.: B01D 61/18, B01D 65/08, C02F 3/12

(54) **MEMBRANFILTER UND VERFAHREN ZUM FILTERN**
MEMBRANE FILTER AND FILTERING METHOD
FILTRE À MEMBRANE ET PROCÉDÉ DE FILTRATION

(30) Priorität: 09.09.2021 DE 102021123363
(43) Veröffentlichungstag der Anmeldung: 17.07.2024
(73) Patentinhaber: membion GmbH, 52159 Roetgen (DE)
(72) Erfinder: VOLMERING, Dirk, 52070 Aachen (DE); VOSSENKAUL, Klaus, 52074 Aachen (DE)
(74) Vertreter: Bauer, Dirk
(86) Internationale Anmeldenummer: PCT/EP2022/068707
(87) Internationale Veröffentlichungsnummer: WO 2023/036490

(56) Entgegenhaltungen:
- EP-A1- 3 388 138
- DE-A1- 102019 115 265
- US-A1- 2016 207 004
- US-A1- 2017 087 518

## Beschreibung

Die Erfindung betrifft zunächst einen Membranfilter für den getauchten Betrieb zum Filtern einer Flüssigkeit mit Membraneinheiten und einem Gasverteilsystem zum Verteilen eines Gases zu Spülzwecken auf die Membraneinheiten, wobei jede der Membraneinheiten jeweils eine Gaseinström-Öffnung und mindestens ein Membranelement aufweist, und wobei jedes der Membranelemente folgende Merkmale aufweist: Membranen zum Filtern eines flüssigen Permeats aus der Flüssigkeit, einen Permeatsammelraum, an den die Membranen permeatseitig angeschlossen sind, und einen Permeat-Auslass zum Ablassen des Permeats aus dem Permeatsammelraum, und wobei das Gasverteilsystem für jede Membraneinheit genau einen Gasauslass zum Auslassen des Gases aus dem Gasverteilsysem in die jeweilige Gaseinström-Öffnung der Membraneinheit aufweist.

Die Erfindung betrifft weiterhin ein Verfahren zum Filtern einer Flüssigkeit in einem Membranfilter für den getauchten Betrieb mit Membraneinheiten und einem Gasverteilsystem zum Verteilen eines Gases zu Spülzwecken auf die Membraneinheiten, wobei jede der Membraneinheiten jeweils eine Gaseinström-Öffnung und mindestens ein Membranelement aufweist, und wobei in jedem der Membranelemente ein flüssiges Permeat mit Hilfe der Membranen aus der Flüssigkeit filtriert wird, das Permeat aus den Membranen in einen permeatseitig an die Membranen angeschlossenen Permeatsammelraum strömt und aus diesem durch einen Permeat-Auslass abgelassen wird, und wobei das Gas aus dem Gasverteilsystem in die jeweilige Gaseinström-Öffnung jeder der Membraneinheiten aus genau einem Gasauslass auströmt.

Ein solcher Membranfilter und ein solches Verfahren sind bekannt aus DE 101 61 095 C1. Diese Membraneinheiten werden durch einen unter dem Flüssigkeitslevel gelegenen Rohrverteiler mit Gas gespeist. Um in einem solchen Rohrverteiler eine gleichmäßige Begasung aller Membraneinheiten sicherzustellen, müssen die Zuführleitungen zu den Membraneinheiten jeweils eine Drossel-Wirkung haben. Diese wird häufig durch den bewussten Einbau von Drossel-Querschnitten erreicht. Die Dimensionierung dieser Drossel-Querschnitte muss dabei immer auf die geringste vorgesehene Gas-Durchströmung erfolgen. Nachteil ist dabei, dass bei höheren Gas-Durchströmungen, deutlich höhere Druckverluste in den Drosselquerschnitten auftreten, die zu einem erhöhten Energiebedarf führen.

Da gerade in kommunalen MBR-Anlagen häufig erhebliche Schwankungen der Durchsatzleistungen auftreten, bedeutet dies, dass eine Anpassung der Filtrationsleistung an die schwankenden Durchsätze aus energetischer Sicht unvorteilhaft ist.

Aus DE 10 2019 129 074 B3 ist im Hintergrund der Erfindung ein Membranfilter bekannt, bei dem jeweils eine Gaseinström-Öffnung in eine geschlossene Membraneinheit durch die untere Öffnung eines den Gas-Sammelraum seitlich begrenzenden Geysir-Rohres gebildet wird. Im Innern weist diese Membraneinheit über dem Geysir einen wannenförmiges Gasverteilelement auf, um das Gas in das Membranelement gleichmäßig zu verteilen. EP 3 388 138 A1 offenbart ein Geysir-Element für eine Membraneinheit. DE 10 2013 218 208 A1 offenbart einen Membranfilter mit einem fingerförmig strukturierten Fußelement, wobei die Finger einen gemeinsamen Permeatsammelraum aufweisen. US 2017/087518 A1 und DE 10 2019 115265 A1 offenbaren weitere Membraneinheiten, aber kein Verteilen von Gas auf mehrere solche Membraneinheiten.

Im weiter entfernten Hintergrund der Erfindung offenbart JP-H 10-66834 A einen Membranfilter mit plattenförmigen Membraneinheiten und wannenförmigen Gasverteilelementen, die das Gas in Zwischenräume zwischen den Membraneinheiten gleichmäßig verteilen.

### Aufgabe

Es ist die Aufgabe der vorliegenden Erfindung, einen Membranfilter mit einem Gasverteilsystem vorzuschlagen, das über einen weiten Variationsbereich der Gas-Zufuhr eine gleichmäßige Gasverteilung bei geringen Druckverlusten ermöglicht.

### Lösung

Ausgehend von dem bekannten Membranfilter wird nach der Erfindung vorgeschlagen, dass das Gasverteilsystem folgende Merkmale aufweist: Eine nach unten offene Wanne, die oben einen Boden als Begrenzung für das Gas aufweist, und einen Gaseinlass zum Einlassen des Gases in die Wanne, wobei die Gasauslässe nach unten offen in einer seitlichen Wandung der Wanne ausgebildet sind und die Membraneinheiten jeweils unterhalb des mindestens einen Membranelementes einen nach unten offenen Gas-Sammelraum und ein Geysir-Element aufweisen mit einer Auslasseinrichtung zum pulsweisen Auslassen des Gases nach oben aus dem Gas-Sammelraum, wobei das Geysir-Element unten die Gaseinström-Öffnung aufweist. Dadurch entfällt die Notwendigkeit eines Rohrverteilers, wodurch der Druckverlust für den Eintrag des Gases sinkt und gleichzeitig ein Betrieb mit nur geringen Druckverlust-Unterschieden auch bei einem weiten Variationsbereich der Gas-Zufuhr ermöglicht wird.

Dabei wird die Höhe des Geysir-Elementes ausgenutzt zu einer Vergrößerung der vertikalen Ausdehnung der Wanne, wobei die Geysir-Elemente seitlich neben der Wanne positioniert sind, derart, dass sie kurz oberhalb der Gasauslässe beginnen. Bei dem erfindungsgemäßen Verfahren mit diesem Membranfilter tritt daher das Gas unmittelbar nach dem Ausströmen aus jedem der Gasauslässe der Wanne vollständig jeweils in eine der Gaseinström-Öffnungen der Geysir-Elemente ein.

Der Gaseinlass kann schlitzförmig mit parallel verlaufenden Kanten oder sich nach oben verjüngend, beispielsweise keilförmig, halbrund oder als Freiform geschwungen ausgebildet sein.

Durch die Gaseinström-Öffnung wird das Gas gezielt in das Innere der Membraneinheit geleitet. Aus dem Stand der Technik sind unterschiedliche Gaseinström-Öffnungen und daran anschließende Mittel zum Leiten des Gases in das Innere der Membraneinheit bekannt.

Vorzugsweise weisen solche Membraneinheiten die jeweilige Gaseinströmöffnung unterhalb des Bodens auf. Diese Bedingung bedeutet, dass die Wanne nicht unter, sondern neben den Membraneinheiten platziert wird. Dadurch können bei gleicher Einblastiefe des Gases Wannen mit größerer Höhe realisiert werden. Dies führt zu einer deutlichen Vergrößerung des Strömungsquerschnitts für das Gas in der Wanne, was zur Folge hat, dass auch in deutlich längeren Wannen eine Gleichverteilung der Gasströmung gewährleistet werden kann. Dies wiederum ermöglicht eine deutliche Erhöhung der Anzahl der Membraneinheiten, die von einer Wanne mit Gas versorgt werden.

Zum Umfang der Erfindung zählt zudem, dass in den Membraneinheiten zwei oder auch mehrere Membranelemente oberhalb des Geysir-Elementes installiert sind. Derartige Ausführungen führen beispielsweise bei zwei übereinander installierten Membranelementen in den Membraneinheiten zu sogenannten Doppeldecker-Systemen.

Bei dem erfindungsgemäßen Membranfilter kann der Lufteinlass in die Wanne verschiedene Positionen aufweisen. Er kann beispielsweise im einfachsten Fall als Rohrstutzen ausgebildet sein, der separiert von der Wanne das Gas von unten in die Wanne einströmen lässt. Er kann aber auch seitlich, beispielsweise an der Stirnseite der Wanne oder auch an deren Längsseite angeschlossen sein. Und er kann auch wie in JP-H 10-66834 A von oben an den Boden der Wanne angeschlossen sein und das Gas durch diesen führen.

Es gehört zum Umfang des erfindungsgemäßen Membranfilters, dass die Membranelemente mit verschiedenen Arten von Membranen bestückt sein können, wie z. B. Hohlfasermembranen, Plattenmembranen, Kissenmembranen oder zu Vorhängen verbundenen Hohlfasermembranen. Die Membranen selber gehören dabei bevorzugt zu dem Bereich der Ultra- oder Mikrofiltrationsmembranen mit Porengrößen zwischen 0,02 und 1,0 µm. Es können jedoch auch andere Membranen aus dem Bereich der Nanofiltration oder Niederdruck-Umkehrosmose eingesetzt werden.

Beim Betrieb des erfindungsgemäßen Membranfilters in Membranbioreaktoren (MBR) ist das eingesetzte Gas in der Regel Luft und die verwendeten Membranen sind aus dem Bereich der Ultra- und Mikrofiltration.

Auch bei der Ausgestaltung der Membranelemente des erfindungsgemäßen Membranfilters gehören verschiedene Konfigurationen zum Umfang der Erfindung. So können die Membranen beispielsweise von einem Rohr umgeben sein, das Teil des Membranelementes ist. Dies hat den Vorteil, dass das eingetragene Gas den Bereich der Membranen nicht seitlich verlassen und ungenutzt neben den Membranen aufwärts strömen kann.

Bei Verwendung von Hohlfasermembranen können diese erfindungsgemäß in double-header Systemen oder single-header Systemen konfiguriert sein. Beides gehört für die Ausgestaltung der Membranelemente ausdrücklich zum Umfang der Erfindung. Bei double-header Systemen werden die Hohlfasermembranen oben und unten in Headern fixiert. Beim single-header-Design schweben die Membranen oben einzeln verschlossen in der zu filtrierenden Flüssigkeit, während sie nur unten in einem Fußelement fixiert sind.

In einer weiteren vorteilhaften Ausgestaltung des erfindungsgemäßen Membranfilters ist in jedem der Gasauslässe ein Schnabel eingesetzt zur Weiterleitung des Gases nach außen in einen von der Wanne beabstandeten Bereich. Dies ist insbesondere dann sinnvoll, wenn zwischen den Membraneinheiten und der seitlichen Wandung der Wanne ein Spalt ist, durch den das Gas an den Membraneinheiten vorbeiströmen kann nach dem Ausstritt aus den Gasauslässen. Durch die eingesetzten Schnäbel wird ein solcher Spalt überbrückt und das Gas kann vollständig in die Gaseinström-Öffnung strömen.

Um diese Weiterleitung des aus den Gasauslässen strömenden Gases zu gewährleisten, ist es vorteilhaft, wenn der Schnabel eine nach unten offene Durchström-Rinne für das Gas aufweist. Alternativ kann die Durchström-Rinne unten abgedeckt sein. Diese Durchström-Rinne hat dabei vorteilhafter Weise ihren engsten Strömungsquerschnitt im Bereich der Wandung der Wanne. Dieser engste Strömungsquerschnitt ist vorteilhafter Weise möglichst kurz und mit Einlaufrundungen versehen, damit sich bei MBR-Anwendungen beispielsweise keine Schlammpartikel oder Störstoffe an irgendwelchen Kanten des Schnabels festsetzen können. In diesem Zusammenhang ist es auch vorteilhaft, wenn sich die Durchström-Rinne unmittelbar nach dem geringsten Strömungsquerschnitt wieder konisch erweitert, um dem Gas möglichst wenig Widerstand zu bieten.

In einer weiteren Ausgestaltung des erfindungsgemäßen Membranfilters ist die Durchström-Rinne auf der Außenseite der Wanne nach oben geneigt. Dadurch wird die Strömungsgeschwindigkeit in der Durchström-Rinne erhöht und das Durchströmen verbessert. Alternativ kann die Durchström-Rinne eben oder auf der Außenseite nach unten geneigt sein. Die Durchström-Rinne ist dann immer mit dem Gas gefüllt und neigt weniger zum Verschmutzen.

Bei der Ausgestaltung des erfindungsgemäßen Membranfilters kann die Wanne aus zwei gekanteten Blechen und zwei Stirnelementen bestehen. Die Bleche können beispielsweise aus Edelstahl bestehen und anschließend zu der Wanne verschweißt oder mit Spezialklebern verklebt werden. Durch diesen Herstellungsprozess lassen sich sehr hohe und schmale Wannen mit geringen Druckverlusten einfach fertigen.

Um bei hohen Wannen ein Schwingen der langen Seitenwände der Wanne zu vermeiden, gehört es zum Umfang der Erfindung, dass die Wanne innen mindestens ein Verbindungselement zwischen den gekanteten Blechen aufweist.

Neben den strömungstechnischen Vorteilen von hohen Wannen haben diese den weiteren Vorteil, dass sie auch die statische Festigkeit gegen Durchbiegung erhöhen. Daher ist bei einer vorteilhaften Ausgestaltung des Membranfilters die Wanne Teil eines Gestells, in dem die Membraneinheiten montiert sind. Bei dieser Gestaltung wird die Höhe der Wanne ausgenutzt, um die Festigkeit des gesamten Membranfilters zu erhöhen. Dabei kann die Wanne beispielsweise mit Seitenteilen des Gestells verschraubt werden.

In einer derartigen Ausgestaltung des erfindungsgemäßen Membranfilters ist es darüber hinaus vorteilhaft, wenn ein Permeatsammelkanal oben an der Wanne angebracht ist, an den die Permeat-Auslässe seitlich anschließen. Die Verbindung von Permeatsammelkanal und Wanne ermöglicht dabei eine Übertragung der Lasten und Kräfte aus den Membraneinheiten auf die Wanne, bzw. auf das Gestell des Moduls. Somit können bei der Gestaltung des Permeatsammelkanals auch weniger feste Materialien, wie z.B. Kunststoffe zum Einsatz kommen.

Ausgehend von dem bekannten Verfahren wird nach der Erfindung vorgeschlagen, dass in dem Gasverteilsystem das Gas durch einen Gaseinlass in eine nach unten offene Wanne strömt, in der es oben durch einen Boden begrenzt wird, wobei die Gasauslässe nach unten offen in einer seitlichen Wandung der Wanne ausgebildet sind und die Membraneinheiten jeweils unterhalb des mindestens einen Membranelementes einen nach unten offenen Gas-Sammelraum und ein Geysir-Element aufweisen mit einer Auslasseinrichtung zum pulsweisen Auslassen des Gases nach oben aus dem Gas-Sammelraum, wobei das Geysir-Element unten die Gaseinström-Öffnung aufweist. Das erfindungsgemäße Verfahren wird insbesondere mit einem erfindungsgemäßen Membranfilter ausgeführt und zeichnet sich gleichermaßen durch dessen vorstehend genannte Vorteile aus.

### Ausführungsbeispiele

Die Erfindung wird nachfolgend anhand von Ausführungsbeispielen erläutert. Es zeigen
- Fig. 1: einen Schnitt durch einen Membranfilter,
- Fig. 2-5: Schnitte und Detailansichten eines zweiten erfindungsgemäßen Membranfilters und
- Fig. 6-9: Ansichten und Detailschnitte eines dritten erfindungsgemäßen Membranfilters

Die in den Figuren dargestellten Zeichnungen sind nicht maßstäblich. Alle nicht angegebenen Details der im Folgenden beschriebenen Membranfilter oder Verfahren sind identisch mit den Ausführungen bereits zuvor beschriebener Membranfilter oder Verfahren.

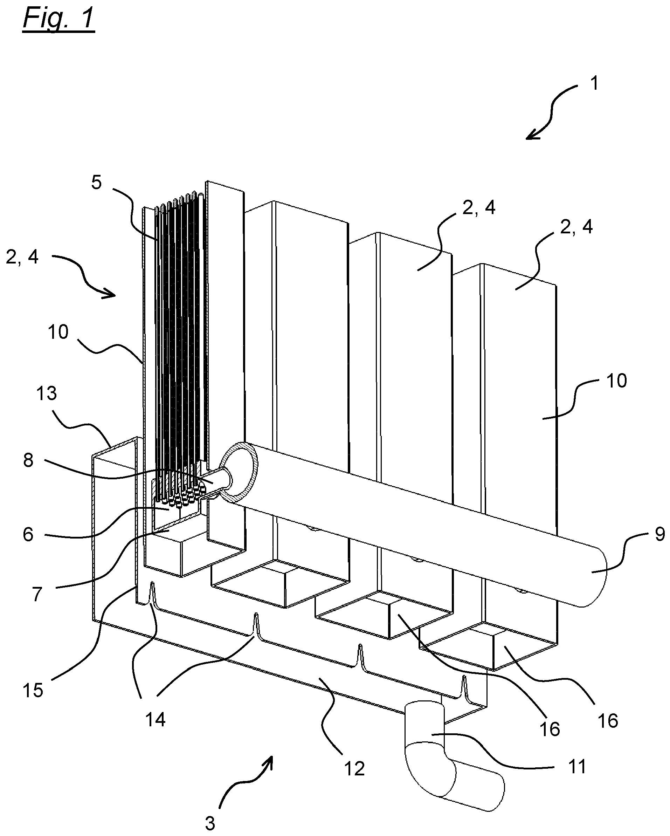

Die Figur 1 zeigt einen Schnitt durch einen ersten nicht erfindungsgemäßen Membranfilter 1 mit Membraneinheiten 2 und einem Gasverteilsystem 3. Jede der Membraneinheiten 2 weist ein Membranelement 4 auf. In diesem Fall bestehen die Membraneinheiten 2 jeweils genau aus einem Membranelement 4. Jedes Membranelement 4 weist Membranen 5 auf und einen Permeatsammelraum 6, der permeatseitig an die Membranen 5 angeschlossen ist. Die Membranen 5 sind in diesem Fall Hohlfasermembranen, die nach dem Single-Header-Prinzip konfiguriert sind, d.h. sie sind oben einzeln verschlossen und nur unten in einem Fußelement 7 fixiert, das den Permeatsammelraum 6 enthält und einen Permeat-Auslass 8 zum Ablassen des Permeats aus dem Permeatsammelraum 6 in einen Permeatsammelkanal 9. Das Membranelement 4 weist darüber hinaus ein Rechteckrohr 10 auf, das die Membranen 5 und auch das Fußelement 7 umgibt und das von dem Permeat-Auslass 8 seitlich durchdrungen wird.

Das Gasverteilsystem 3 weist einen Gaseinlass 11 auf zum Einlassen von Gas von unten in eine nach unten offene Wanne 12, die oben einen Boden 13 aufweist als Begrenzung für das Gas. Der Gaseinlass 11 ist in dem Membranfilter 1 getrennt von der Wanne 12. Das Gasverteilsystem 3 weist ferner nach unten offene keilförmige Gasauslässe 14 in einer seitlichen Wandung 15 der Wanne 12 auf zum Ausströmen des Gases aus der Wanne 12.

Die Membraneinheiten 2 im Membranfilter 1 weisen unterhalb des Bodens 13 je eine Gaseinström-Öffnung 16 auf. Im Betrieb füllt sich die Wanne 12 mit dem Gas bis dieses durch die Gasauslässe 14 aus dem Gasverteilsystem 3 ausströmt und dann durch die Gaseinström-Öffnungen 16 in die Membraneinheiten 2 einströmt. Die Gaseinström-Öffnung 16 ist die einzige Möglichkeit für das Einströmen des Gases in die jeweilige Membraneinheit 2.

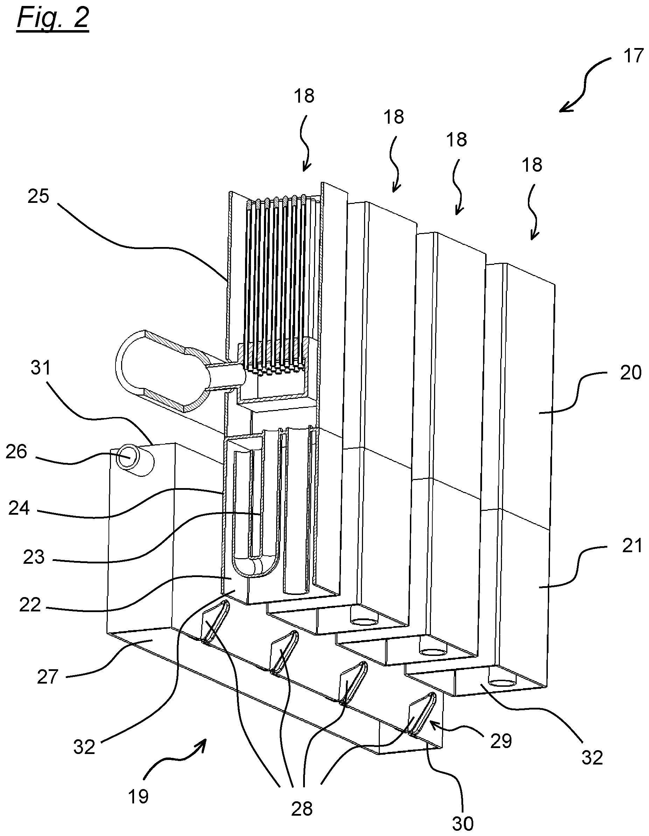

Die Figur 2 zeigt die Ansicht eines zweiten erfindungsgemäßen Membranfilters 17 mit vier Membraneinheiten 18 und einem Gasverteilsystem 19. Die Membraneinheiten 18 weisen jeweils unterhalb eines Membranelementes 20 ein Geysir-Element 21 auf. Die Membranelemente 20 sind gleich aufgebaut wie die des ersten Membranfilters 1.

Das Geysir-Element 21 weist einen nach unten offenen Gas-Sammelraum 22 auf und eine Auslasseinrichtung 23 zum pulsweisen Auslassen eines Gases aus dem Gas-Sammelraum 22. Das Geysir-Element 21 weist zudem ein Geysir-Rechteckrohr 24 auf, das oben geschlossen und unten offen ist und den Gas-Sammelraum 22 seitlich begrenzt. Das Geysir-Rechteckrohr 24 hat den gleichen Querschnitt wie ein Rechteckrohr 25 des Membranelementes 20.

Beim Gasverteilsystem 19 des erfindungsgemäßen Membranfilters 17 ist ein Gaseinlass 26 stirnseitig an eine nach unten offene Wanne 27 angeschlossen zum Einlassen des Gases in die Wanne 27. Das Gasverteilsystem 19 weist zudem vier Schnäbel 28 auf, die in von diesen verdeckte keilförmige Gasauslässe 29 in einer seitlichen Wandung 30 der Wanne 27 eingesetzt sind zur Weiterleitung des Gases nach außen in einen von der Wanne 27 beabstandeten Bereich.

Erfindungsgemäß weisen die Membraneinheiten 18 unterhalb eines nicht im Schnitt dargestellten Bodens 31 der Wanne 27 eine Gaseinström-Öffnung 32 auf. Diese ist gleichzeitig die offene, untere Seite des Geysir-Rechteckrohres 24 des Geysir-Elementes 21. Die Gaseinström-Öffnung 32 ist die einzige Einströmmöglichkeit für das Gas in die jeweilige Membraneinheit 18.

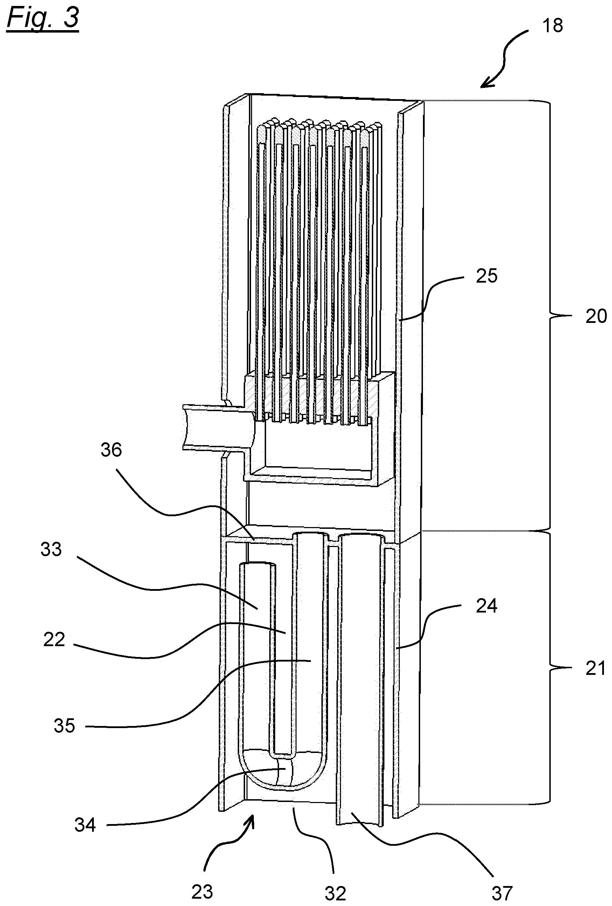

Figur 3 zeigt einen Schnitt durch die Membraneinheit 18 des zweiten erfindungsgemäßen Membranfilters 17 mit dem Membranelement 20 und dem darunter installierten Geysir-Element 21.

Die Auslasseinrichtung 23 des Geysir-Elementes 21 weist dabei folgende Merkmale auf: einen Gasheberkanal 33 zum Ausströmen des Gases aus dem Gas-Sammelraum 22 nach unten und einen Umlenkungsbereich 34 unten an dem Gasheberkanal 33 zum Umlenken des ausströmenden Gases nach oben. An den Umlenkungsbereich 34 schließt oben ein Ausströmkanal 35 an zum Auslassen des Gases nach oben aus dem Geysir-Element 21. Das Geysir-Rechteckrohr 24 hat oben eine geschlossene obere Geysir-Wandung 36 als obere Begrenzung für den Gas-Sammelraum 22. Da das Geysir-Element 21 im erfindungsgemäßen Membranfilter 17 direkt unten an das Membranelement 20 anschließt, weist es zudem ein Einströmrohr 37 auf, um die Einströmung von zu filtrierender Flüssigkeit von unten in das Membranelement 20 zu ermöglichen. Das Einströmrohr 37 und der Ausströmkanal 35 durchdringen die obere Geysir-Wandung 36. Gasheberkanal 33, Umlenkungsbereich 34 und Ausströmkanal 35 bilden zusammen die Auslasseinrichtung 23.

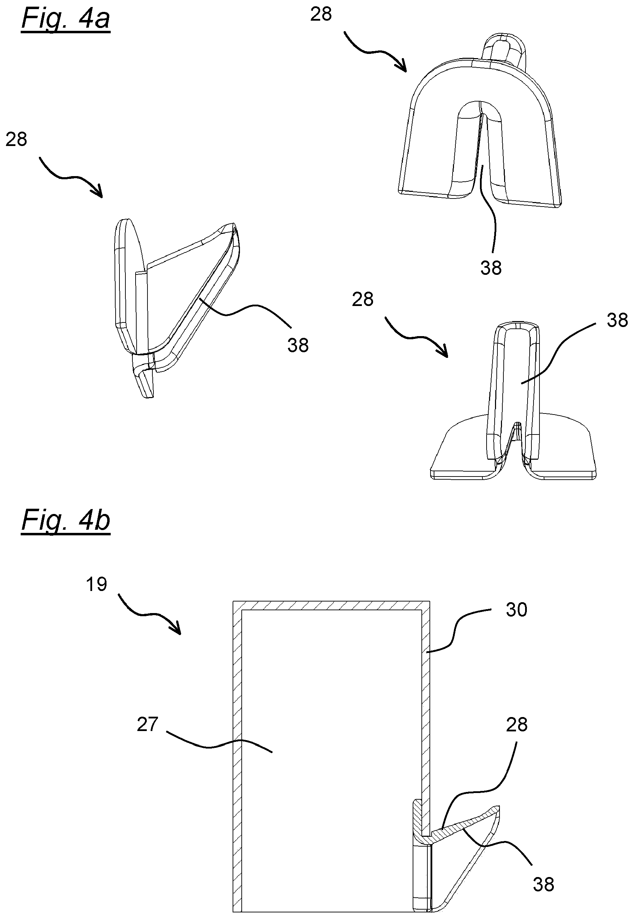

Figur 4a zeigt drei Ansichten des Schnabels 28 des erfindungsgemäßen Membranfilters 17. Dieser weist eine nach unten offene Durchström-Rinne 38 auf zur Weiterleitung des Gases nach außen in einen von der Wanne 27 beabstandeten Bereich.

Figur 4b zeigt den Einsatz des Schnabels 28 in die Wandung 30 der Wanne 27 des Gasverteilsystems 19. Die Durchström-Rinne 38 ist dabei auf der Außenseite der Wanne 27 nach oben geneigt zum besseren Ausströmen des Gases aus der Wanne 27.

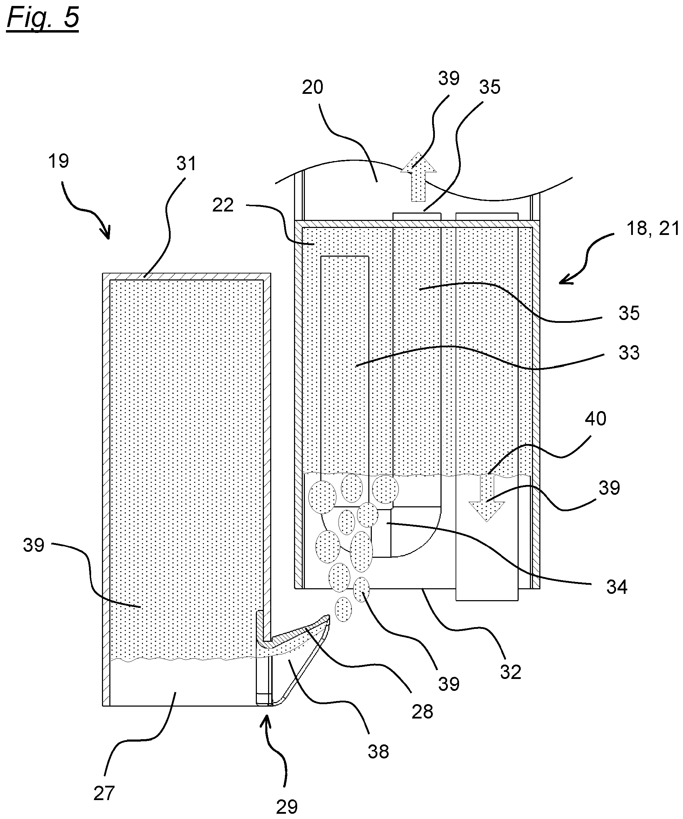

Figur 5 veranschaulicht den erfindungsgemäßen Betrieb des zweiten erfindungsgemäßen Membranfilters 17 und zeigt einen Detailschnitt durch das Gasverteilsystem 19 und die Membraneinheit 18, bzw. durch das Geysir-Element 21 als unteren Teil der Membraneinheit 18. Dabei strömt ein Gas 39 durch den nicht gezeigten Gaseinlass 26 in die Wanne 27, füllt diese und strömt dann kontinuierlich durch die Gasauslässe 29, bzw. durch die Durchström-Rinnen 38 der Schnäbel 28 aus der Wanne 27 aus und danach durch die Gaseinström-Öffnung 32 in das Geysir-Element 21 ein. Dabei liegt die Gaseinström-Öffnung 32 unterhalb des Bodens 31 der Wanne 27.

Während des Befüllvorgangs des Gas-Sammelraums 22 des Geysir-Elementes 21 mit dem Gas 39 sinkt ein Flüssigkeitspegel 40 in dem Gas-Sammelraum 22, bis dieser den Ausströmkanal 35 unterschreitet. Dann strömt das Gas 39 von oben durch den Gasheberkanal 33 nach unten in den Umlenkungsbereich 34, wo es nach oben umgelenkt wird und anschließend durch den Ausströmkanal 35 oben aus dem Geysir ausströmt. Das Gas 39 strömt dabei so lange aus dem Gas-Sammelraum 22 aus, bis dieser wieder von unten mit Flüssigkeit geflutet ist. Dann beginnt der Befüllvorgang mit Gas 39 von neuem. So entsteht aus der kontinuierlichen Gas-Einströmung unten in das Geysir-Element 21 eine pulsierende Gas-Ausströmung oben aus dem Geysir-Element 21 in das darüber installierte Membranelement 20, um die darin befindlichen, nicht dargestellten Membranen effektiv mit dem Gas 39 zu spülen.

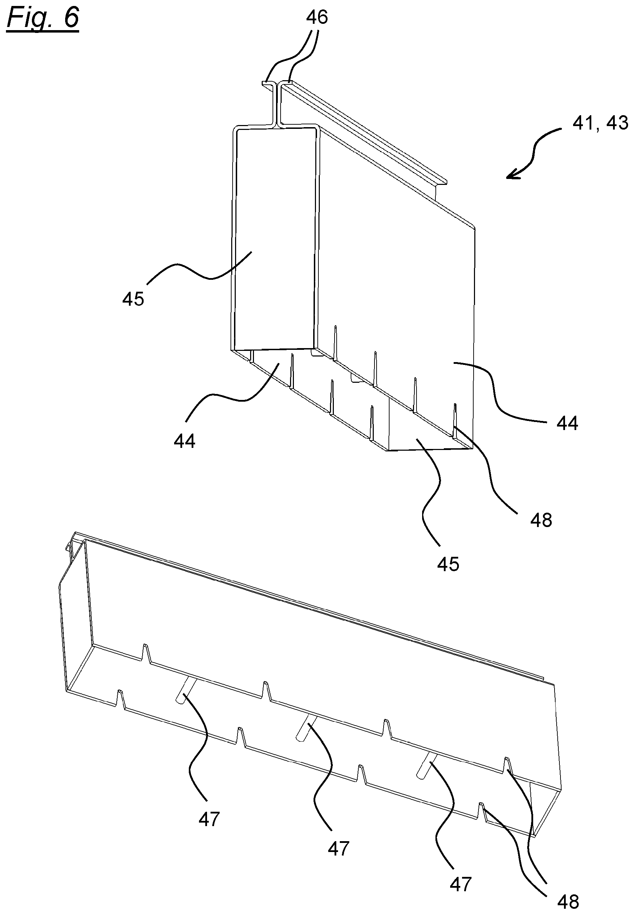

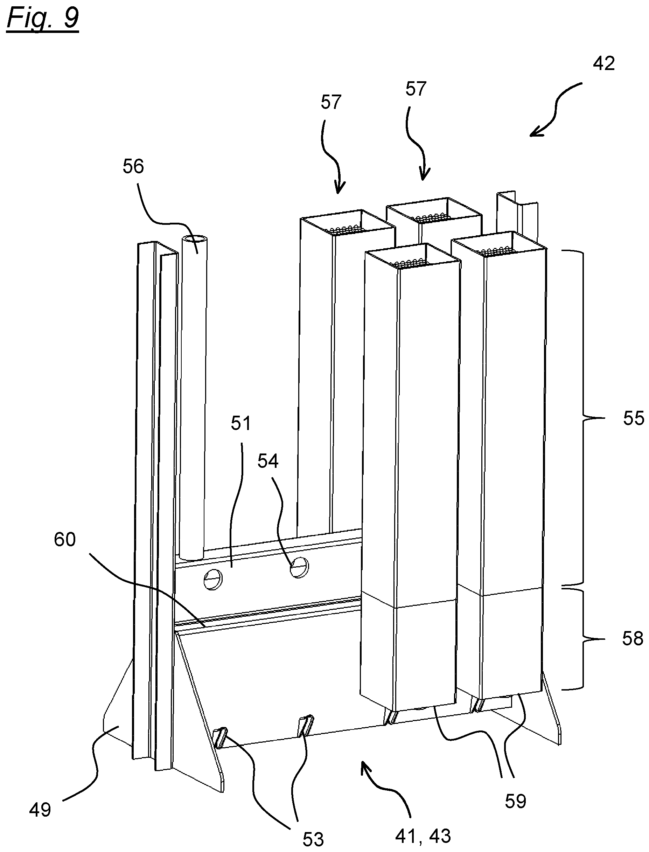

Figur 6 zeigt zwei Ansichten der Wanne 41 eines dritten, erst in Figur 9 dargestellten erfindungsgemäßen Membranfilters 42 als Teil von dessen Gasverteilsystem 43. In dieser Ausführung besteht die Wanne 41 aus zwei gekanteten Blechen 44 und zwei Stirnelementen 45, die miteinander verschweißt werden. Die beiden Bleche 44 bilden dabei oben an der Wanne 41 ein T-Profil 46 in Längsrichtung der Wanne 41 aus. In der unteren Ansicht ist zu sehen, dass die Wanne 41 innen drei Verbindungselemente 47 zwischen den gekanteten Blechen 44 aufweist, zur Aussteifung der Bleche 44 beim Betrieb. Jedes der Bleche weist dabei nach unten offene keilförmige Gasauslässe 48 auf zum Ausströmen des Gases aus der Wanne 41.

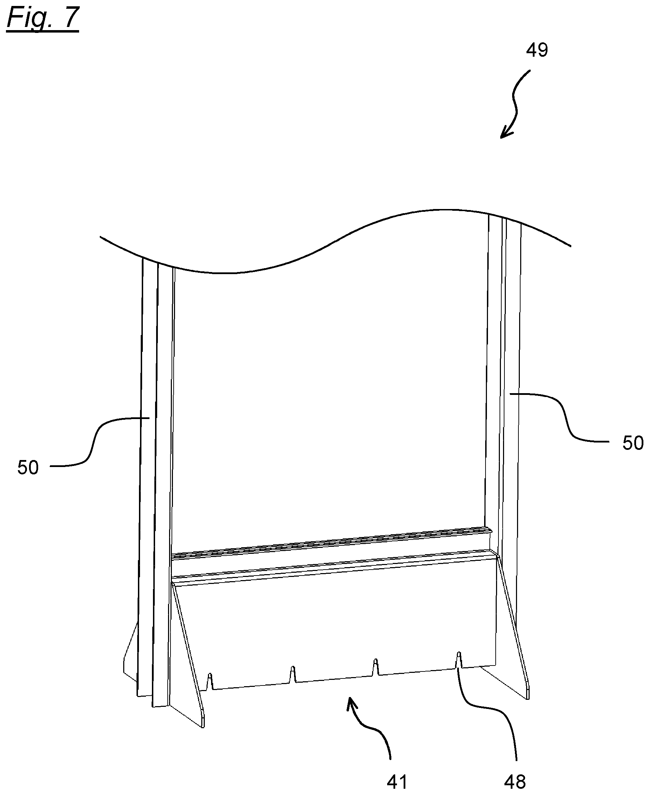

Figur 7 zeigt den unteren Ausschnitt eines Gestells 49 des erst in Figur 9 dargestellten dritten erfindungsgemäßen Membranfilters 42. Die Wanne 41 ist dabei Teil dieses Gestells 49 und wird mit zwei Seitenteilen 50 des Gestells 49 verschraubt.

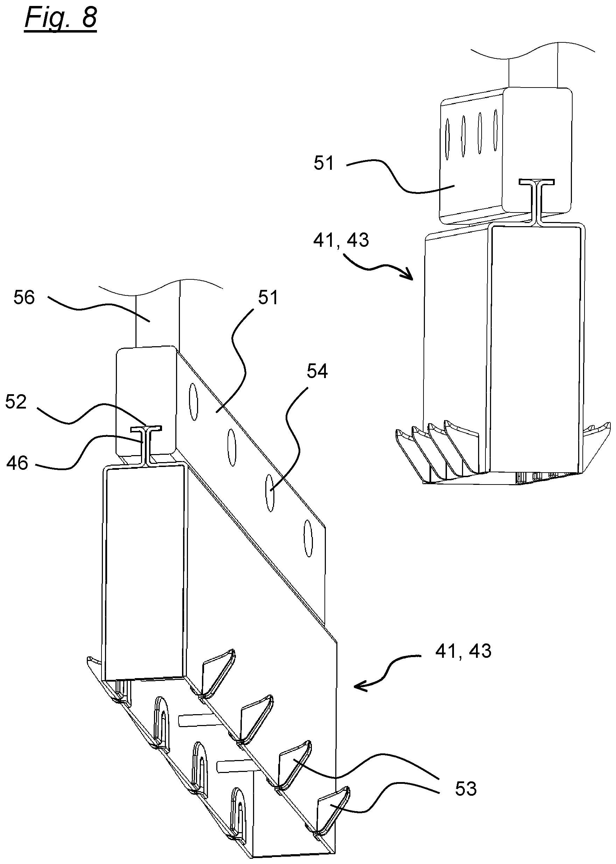

Figur 8 zeigt zwei Ansichten der Wanne 41 des erst in Figur 9 dargestellten dritten erfindungsgemäßen Membranfilters 42, an der oben ein Permeatsammelkanal 51 angebracht ist. Dieser hat in Längsrichtung eine schwalbenschwanzförmige Nut 52, mit der er über das T-Profil 46 geschoben ist. So besteht eine Verbindung zwischen dem Permeatsammelkanal 51 und der Wanne 41. In die Gasauslässe 48 sind Schnäbel 53 eingesetzt zur Weiterleitung von Gas in einen Außenbereich der Wanne 41. Der Permeatsammelkanal 51 weist acht Permeat-Einlässe 54 auf zum seitlichen Anschluss von Membranelementen 55. Zudem weist der Permeatsammelkanal 51 ein Permeat-Rohr 56 auf zur Ableitung des Permeats aus dem erfindungsgemäßen Membranfilter 42.

Figur 9 zeigt den mit vier Membraneinheiten 57 zur Verdeutlichung der Struktur nur teilweise bestückten dritten erfindungsgemäßen Membranfilter 42. Im Betrieb weist der Membranfilter 42 entsprechend acht Membraneinheiten 57 auf. Die Membraneinheiten 57 weisen jeweils ein Membranelement 55 und ein darunter installiertes Geysir-Element 58 auf. Sie sind im Gestell 49 montiert und mit ihren Membranelementen 55 an die Permeat-Einlässe 54 des Permeatsammelkanals 51 angeschlossen. Die Membraneinheiten 57 sind dabei jeweils oberhalb eines Schnabels 53 positioniert, so dass das aus jedem Schnabel 53 im Betrieb ausströmendes Gas direkt von unten in eine Gaseinström-Öffnung 59 der darüber positionierten Membraneinheit 57, bzw. des Geysir-Elementes 58 einströmt. Erfindungsgemäß liegen dabei die Gaseinström-Öffnungen 59 unterhalb eines Bodens 60 der Wanne 41 des Gasverteilsystems 43. Der nicht dargestellte Gaseinlass des dritten erfindungsgemäßen Membranfilters ist ein separates Rohr, das das Gas von unten in die Wanne 41 einlässt.

In den Figuren sind
- 1: Membranfilter
- 2: Membraneinheit
- 3: Gasverteilsystem
- 4: Membranelement
- 5: Membranen
- 6: Permeatsammelraum
- 7: Fußelement
- 8: Permeat-Auslass
- 9: Permeatsammelkanal
- 10: Rechteckrohr
- 11: Gaseinlass
- 12: Wanne
- 13: Boden
- 14: Gasauslass
- 15: Wandung
- 16: Gaseinström-Öffnung
- 17: Membranfilter
- 18: Membraneinheit
- 19: Gasverteilsystem
- 20: Membranelement
- 21: Geysir-Element
- 22: Gas-Sammelraum
- 23: Auslasseinrichtung
- 24: Geysir-Rechteckrohr
- 25: Rechteckrohr
- 26: Gaseinlass
- 27: Wanne
- 28: Schnabel
- 29: Gasauslass
- 30: Wandung
- 31: Boden
- 32: Gaseinström-Öffnung
- 33: Gasheberkanal
- 34: Umlenkungsbereich
- 35: Ausströmkanal
- 36: obere Geysir-Wandung
- 37: Einströmrohr
- 38: Durchström-Rinne
- 39: Gas
- 40: Flüssigkeitspegel
- 41: Wanne
- 42: Membranfilter
- 43: Gasverteilsystem
- 44: Blech
- 45: Stirnelement
- 46: T-Profil
- 47: Verbindungselement
- 48: Gasauslass
- 49: Gestell
- 50: Seitenteil
- 51: Permeatsammelkanal
- 52: Nut
- 53: Schnabel
- 54: Permeat-Einlass
- 55: Membranelement
- 56: Permeat-Rohr
- 57: Membraneinheit
- 58: Geysir-Element
- 59: Gaseinström-Öffnung
- 60: Boden

## Patentansprüche

1. Membranfilter (1, 17, 42) für den getauchten Betrieb zum Filtern einer Flüssigkeit mit Membraneinheiten (2, 18, 57) und einem Gasverteilsystem (3, 19, 43) zum Verteilen eines Gases (39) zu Spülzwecken auf die Membraneinheiten (2, 18, 57), wobei jede der Membraneinheiten (2, 18, 57) jeweils eine Gaseinström-Öffnung (16, 32, 59) und mindestens ein Membranelement (4, 20, 55) aufweist,
und wobei jedes der Membranelemente (4, 20, 55) folgende Merkmale aufweist:
• Membranen (5) zum Filtern eines flüssigen Permeats aus der Flüssigkeit,
• einen Permeatsammelraum (6), an den die Membranen (5) permeatseitig angeschlossen sind, und
• einen Permeat-Auslass (8) zum Ablassen des Permeats aus dem Permeatsammelraum (6),
und wobei das Gasverteilsystem (3, 19, 43) für jede Membraneinheit (2, 18, 57) genau einen Gasauslass (14, 29, 48) zum Auslassen des Gases aus dem Gasverteilsystem (3, 19, 43) in die jeweilige Gaseinström-Öffnung (16, 32, 59) der Membraneinheit (2, 18, 57) aufweist, ***dadurch gekennzeichnet, dass*** das Gasverteilsystem (3, 19, 43) folgende Merkmale aufweist:
• eine nach unten offene Wanne (12, 27, 41), die oben einen Boden (13, 31, 60) als Begrenzung für das Gas (39) aufweist, und
• einen Gaseinlass (11, 26) zum Einlassen des Gases (39) in die Wanne (12, 27, 41),
wobei die Gasauslässe (14, 29, 48) nach unten offen in einer seitlichen Wandung (15, 30) der Wanne (12, 27, 41) ausgebildet sind und die Membraneinheiten (2, 18, 57) jeweils unterhalb des mindestens einen Membranelementes (4, 20, 55) einen nach unten offenen Gas-Sammelraum (22) und ein Geysir-Element (21, 58) aufweisen mit einer Auslasseinrichtung (23) zum pulsweisen Auslassen des Gases (39) nach oben aus dem Gas-Sammelraum (22), wobei das Geysir-Element (21, 58) unten die Gaseinström-Öffnung (16, 32, 59) aufweist.

2. Membranfilter (1, 17, 42) nach Anspruch 1*, **dadurch gekennzeichnet, dass*** die Membraneinheiten (2, 18, 57) die jeweilige Gaseinström-Öffnung (16, 32, 59) unterhalb des Bodens (13, 31, 60) aufweisen.

3. Membranfilter (1, 17, 42) nach einem der vorherigen Ansprüche, ***dadurch gekennzeichnet, dass*** in jedem der Gasauslässe (14, 29, 48) ein Schnabel (28, 53) eingesetzt ist zur Weiterleitung des Gases (39) nach außen in einen von der Wanne (12, 27, 41) beabstandeten Bereich.

4. Membranfilter (1, 17, 42) nach dem vorherigen Anspruch, ***dadurch gekennzeichnet, dass*** der Schnabel (28, 53) eine nach unten offene Durchström-Rinne (38) für das Gas (39) aufweist.

5. Membranfilter (1, 17, 42) nach dem vorherigen Anspruch, ***dadurch gekennzeichnet, dass*** die Durchström-Rinne (38) auf der Außenseite der Wanne (12, 27, 41) nach oben geneigt ist.

6. Membranfilter (1, 17, 42) nach einem der vorherigen Ansprüche, ***dadurch gekennzeichnet, dass*** die Wanne (12, 27, 41) aus zwei gekanteten Blechen (44) und zwei Stirnelementen (45) besteht.

7. Membranfilter (1, 17, 42) nach dem vorherigen Anspruch, ***dadurch gekennzeichnet, dass*** die Wanne (12, 27, 41) innen mindestens ein Verbindungselement (47) zwischen den gekanteten Blechen (44) aufweist.

8. Membranfilter (1, 17, 42) nach einem der vorherigen Ansprüche, ***dadurch gekennzeichnet, dass*** die Wanne (12, 27, 41) Teil eines Gestells (49) ist, in dem die Membraneinheiten (2, 18, 57) montiert sind.

9. Membranfilter (1, 17, 42) nach einem der vorherigen Ansprüche, ***dadurch gekennzeichnet, dass*** ein Permeatsammelkanal (9, 51) oben an der Wanne (12, 27, 41) angebracht ist, an den die Permeat-Auslässe (8) seitlich anschließen.

10. Verfahren zum Filtern einer Flüssigkeit in einem Membranfilter (1, 17, 42) für den getauchten Betrieb mit Membraneinheiten (2, 18, 57) und einem Gasverteilsystem (3, 19, 43) zum Verteilen eines Gases (39) zu Spülzwecken auf die Membraneinheiten (2, 18, 57), wobei jede der Membraneinheiten (2, 18, 57) jeweils eine Gaseinström-Öffnung (16, 32, 59) und mindestens ein Membranelement (4, 20, 55) aufweist,
und wobei in jedem der Membranelemente (4, 20, 55)
• ein flüssiges Permeat mit Hilfe von Membranen (5) aus der Flüssigkeit filtriert wird,
• das Permeat aus den Membranen (5) in einen permeatseitig an die Membranen (5) angeschlossenen Permeatsammelraum (6) strömt und aus diesem durch einen Permeat-Auslass (8) abgelassen wird,
und wobei das Gas aus dem Gasverteilsystem (3, 19, 43) in die jeweilige Gaseinström-Öffnung (16, 32, 59) jeder der Membraneinheiten (2, 18, 57) aus genau einem Gasauslass (14, 29, 48) ausströmt, ***dadurch gekennzeichnet, dass*** in dem Gasverteilsystem (3, 19, 43) das Gas (39) durch einen Gaseinlass (11, 26) in eine nach unten offene Wanne (12, 27, 41) strömt, in der es oben durch einen Boden (13, 31, 60) begrenzt wird, wobei die Gasauslässe (14, 29, 48) nach unten offen in einer seitlichen Wandung (15, 30) der Wanne (12, 27, 41) ausgebildet sind und die Membraneinheiten (2, 18, 57) jeweils unterhalb des mindestens einen Membranelementes (4, 20, 55) einen nach unten offenen Gas-Sammelraum (22) und ein Geysir-Element (21, 58) aufweisen mit einer Auslasseinrichtung (23) zum pulsweisen Auslassen des Gases (39) nach oben aus dem Gas-Sammelraum (22), wobei das Geysir-Element (21, 58) unten die Gaseinström-Öffnung (16, 32, 59) aufweist.

## Claims

1. A membrane filter (1, 17, 42) for submerged operation for filtering a liquid, the membrane filter comprising:
membrane units (2, 18, 57) and a gas distribution system (3, 19, 43) for distributing a gas (39) to the membrane units and flushing the membrane units, wherein each of the membrane units (2, 18, 57) includes a respective gas inlet opening (16, 32, 59) and at least one membrane element (4, 20, 55), and wherein each of the membrane elements (4, 20, 55) has the following features:
- membranes (5) for filtering a liquid permeate from the liquid,
- a permeate collection cavity (6) connected to permeate sides of the membranes (5), and
a permeate outlet (8) configured to drain the permeate from the permeate collection cavity (6), and
wherein the gas distribution system (3, 19, 43) includes exactly one gas outlet (14, 29, 48) for each membrane unit (2, 18, 57), the exactly one gas outlet (14, 29, 48) configured to exhaust the gas from the gas distribution system (3, 19, 43) into the respective gas inlet opening (16, 32, 59) of the membrane unit (2, 18, 57),
**characterized in that** the gas distribution system (3, 19, 43) includes the following features:
- a downward open tub (12, 27, 41) including a base (13, 31, 60) arranged at a top of the tub and forming a boundary for the gas (39), and
- a gas inlet (11, 26) configured let the gas (39) into the tub (12, 27, 41),
wherein the gas outlets (14, 29, 48) are configured downward open in a lateral wall (15, 30) of the tub (12, 27, 41), and the membrane units (2, 18, 57) respectively include a downward open gas collection cavity (22) below the at least one membrane element (4, 20, 55), and the membrane units (2, 18, 57) respectively include a geyser element (21, 58) below the at least one membrane element (4, 20, 55), the geyser element (21, 58) including an outlet device (23) configured for a pulsating outlet of the gas (39) in an upward direction from the gas collection cavity (22), wherein the geyser element (21, 58) includes the gas inlet opening (16, 32, 59) at a bottom of the geyser element (21, 58).

2. The membrane filter (1, 17, 42) according to claim 1, **characterized in that** the membrane units (2, 18, 57) include the respective gas inlet opening (16, 32, 59) below the base (13, 31, 60).

3. The membrane filter (1, 17, 42) according to one of the preceding claims, **characterized in that** a beak shaped spout (28, 53) is inserted into each of the gas outlets (14, 29, 48) and configured to conduct the gas (39) outward into an area offset from the tub (12, 27, 41).

4. The membrane filter (1, 17, 42) according to the preceding claim, **characterized in that** the beak shaped spout (28, 53) includes a downward open flow through channel (38) for the gas (39).

5. The membrane filter (1, 17, 42) according to the preceding claim, **characterized in that** the flow through channel (38) is sloped upward on an outside of the tub (12, 27, 41).

6. The membrane filter (1, 17, 42) according to one of the preceding claims, **characterized in that** the tub (12, 27, 41) is made from two bent sheet metal pieces (44) and two face elements (45).

7. The membrane filter (1, 17, 42) according to the preceding claim, **characterized in that** the tub (12, 27, 41) internally includes at least one connection element (47) between the bent sheet metal pieces (44).

8. The membrane filter (1, 17, 42) according to one of the preceding claims, **characterized in that** the tub (12, 27, 41) forms part of a frame (49) that mounts the membrane units (2, 18, 57).

9. The membrane filter (1, 17, 42) according to one of the preceding claims, **characterized in that** a permeate collection channel (9, 51) is arranged on top of the tub (12, 27 41), wherein the permeate outlets (8) laterally adjoin the permeate collection channel (9, 51).

10. A method for filtering a liquid in a membrane filter (1, 17, 42) configured for submerged operation, the membrane filter including membrane units (2, 18, 57) and a gas distribution system (3, 19, 43) for distributing a gas (39) to the membrane units and flushing the membrane units, wherein each of the membrane units (2, 18, 57) includes a respective gas inlet opening (16, 32, 59) and at least one membrane element (4, 20, 55), and wherein the following steps performed in each of the membrane elements (4, 20, 55)
- a liquid permeate is filtered from the liquid by membranes (5),
- the permeate flows from the membranes (5) into a permeate collection cavity (6) connected to permeate sides of the membranes (5) and from the permeate collection cavity into a permeate outlet (8) from which the permeate is drained, and
wherein the gas flows from the gas distribution system (3, 19, 43) into the respective gas inlet opening (16, 32, 59) of each of the membrane units (2, 18, 57) from exactly one gas outlet (14, 29, 48),
**characterized in that** the gas (39) flows in the gas distribution system (3, 19, 43) through a gas inlet (11, 26) into a downward open tub (12, 27, 41), wherein the gas is delimited at a top of the tub by a base (13, 31, 60) of the tub, wherein the gas outlets (14, 29, 48) are configured downward open in a lateral wall (15, 30) of the tub (12, 27, 41), and the membrane units (2, 18, 57) respectively include a downward open gas collection cavity (22) below the at least one membrane element (4, 20, 55), and the membrane units (2, 18, 57) respectively include a geyser element (21, 58) below the at least one membrane element (4, 20, 55), the geyser element (21, 58) including an outlet device (23) configured for a pulsating outlet of the gas (39) in an upward direction from the gas collection cavity (22), wherein the geyser element (21, 58) includes the gas inlet opening (16, 32, 59) at a bottom of the geyser element (21, 58).

## Revendications

1. Filtre à membranes (1, 17, 42) pour le fonctionnement immergé destiné au filtrage d'un liquide avec des unités à membranes (2, 18, 57) et un système de distribution de gaz (3, 19, 43) pour distribuer un gaz (39) à des fins de rinçage sur les unités à membranes (2, 18, 57), sachant que chacune des unités à membranes (2, 18, 57) comporte respectivement une ouverture d'entrée de gaz (16, 32, 59) et au moins un élément à membranes (4, 20, 55),
et sachant que chacun des éléments à membranes (4, 20, 55) comporte les caractéristiques suivantes :
• membranes (5) pour filtrer un perméat liquide à partir du liquide,
• un compartiment collecteur de perméat (6), auquel sont raccordées côté perméat les membranes (5), et
• une sortie de perméat (8) pour évacuer le perméat du compartiment collecteur de perméat (6),
et sachant que le système de distribution de gaz (3, 19, 43) pour chaque unité à membranes (2, 18, 57) comporte exactement une sortie de gaz (14, 29, 48) pour évacuer le gaz du système de distribution de gaz (3, 19, 43) dans l'ouverture d'entrée de gaz (16, 32, 59) respective de l'unité à membranes (2, 18, 57), ***caractérisé* en ce que** le système de distribution de gaz (3, 19, 43) comporte les caractéristiques suivantes :
• un bac ouvert vers le bas (12, 27, 41), qui comporte en haut un fond (13, 31, 60) en tant que limite pour le gaz (39), et
• une entrée de gaz (11, 26) pour faire entrer le gaz (39) dans le bac (12, 27, 41),
sachant que les sorties de gaz (14, 29, 48) sont constituées ouvertes vers le bas dans une paroi latérale (15, 30) du bac (12, 27, 41) et les unités à membranes (2, 18, 57) comportent respectivement en dessous d'au moins un élément à membranes (4, 20, 55) un compartiment collecteur de gaz ouvert vers le bas (22) et un élément type geyser (21, 58) avec un système de sortie (23) pour évacuer par pulsions le gaz (39) vers le haut du compartiment collecteur de gaz (22), sachant que l'élément de type geyser (21, 58) comporte en bas l'ouverture d'entrée de gaz (16, 32, 59).

2. Filtre à membranes (1, 17, 42) selon la revendication ***1, caractérisé en ce que*** les unités à membranes (2, 18, 57) comportent l'ouverture d'entrée de gaz (16, 32, 59) respective en dessous du fond (13, 31, 60).

3. Filtre à membranes (1, 17, 42) selon l'une quelconque des revendications précédentes, ***caractérisé en ce qu***'un bec (28, 53) est inséré dans chacune des sorties de gaz (14, 29, 48) pour transmettre le gaz (39) vers l'extérieur dans une zone distante du bac (12, 27, 41).

4. Filtre à membranes (1, 17, 42) selon la revendication précédente, ***caractérisé par*** le bec (28, 53) comporte un conduit de passage (38) ouvert vers le bas pour le gaz (39).

5. Filtre à membranes (1, 17, 42) selon la revendication précédente, ***caractérisé en ce que*** le conduit de passage (38) est incliné vers le haut sur le côté extérieur du bac (12, 27, 41).

6. Filtre à membranes (1, 17, 42) selon l'une quelconque des revendications précédentes, ***caractérisé en ce que*** le bac (12, 27, 41) est composé de deux tôles pliées (44) et de deux éléments frontaux (45).

7. Filtre à membranes (1, 17, 42) selon la revendication précédente, ***caractérisé en ce que*** le bac (12, 27, 41) comporte à l'intérieur au moins un élément de liaison (47) entre les tôles pliées (44).

8. Filtre à membranes (1, 17, 42) selon l'une quelconque des revendications précédentes, ***caractérisé en ce que*** le bac (12, 27,41) est une partie d'un châssis (49) dans lequel sont montées les unités à membranes (2, 18, 57).

9. Filtre à membranes (1, 17, 42) selon l'une quelconque des revendications précédentes, ***caractérisé en ce qu*'**un conduit collecteur de perméat (9, 51) est placé en haut sur le bac (12, 27, 41) auquel se raccordent latéralement les sorties de perméat (8).

10. Procédé de filtrage d'un liquide dans un filtre à membranes (1, 17, 42) pour le fonctionnement immergé avec des unités à membranes (2, 18, 57) et un système de distribution de gaz (3, 19, 43) pour distribuer un gaz (39) à des fins de rinçage sur les unités à membranes (2, 18, 57), sachant que chacune des unités à membranes (2, 18, 57) comporte respectivement une ouverture d'entrée de gaz (16, 32, 59) et au moins un élément à membranes (4, 20, 55),
et sachant que dans chacun des éléments à membranes (4, 20, 55)
• un perméat liquide est filtré à partir du liquide à l'aide des membranes (5),
• le perméat s'écoule des membranes (5) dans un compartiment collecteur de perméat (6) raccordé côté perméat aux membranes (5) et est évacué de celui-ci par une sortie de perméat (8),
et sachant que le gaz s'écoule du système de distribution de gaz (3, 19, 43) dans l'ouverture d'entrée de gaz (16, 32, 59) respective de chacune des unités à membranes (2, 18, 57) exactement à partir d'une sortie de gaz (14, 29, 48), ***caractérisé en ce que*** dans le système de distribution de gaz (3, 19, 43) le gaz (39) coule par une entrée de gaz (11, 26) dans un bac ouvert vers le bas (12, 27, 41) dans lequel il est limité en haut par un fond (13, 31, 60), sachant que les sorties de gaz (14, 29, 48) sont constituées ouvertes vers le bas dans une paroi latérale (15, 30) du bac (12, 27, 41) et les unités à membranes (2, 18, 57) comportent respectivement en dessous d'au moins un élément à membranes (4, 20, 55) un compartiment collecteur de gaz (22) ouvert vers le bas et un élément de type geyser (21, 58) avec un système d'évacuation (23) pour évacuer par pulsions le gaz (39) vers le haut du compartiment collecteur de gaz (22), sachant que l'élément de type geyser (21, 58) comporte en bas l'ouverture d'entrée de gaz (16, 32, 59).
